# EUROPÄISCHE PATENTANMELDUNG

(11) **EP 1 760 618 A1**
(43) Veröffentlichungstag der Anmeldung: **07.03.2007**
(21) Anmeldenummer: 05018839.0
(22) Anmeldetag: 30.08.2005
(51) Int. Cl.: G06F 21/00

(54) **Verfahren, Datenverarbeitungsvorrichtung und Computerprogrammprodukt zur Authentifizierung und Durchführung einer Wartungsfunktion**

(71) Anmelder: Fujitsu Siemens Computers GmbH, 80807 München (DE)
(72) Erfinder: Seebauer, Annette, 86343 Königsbrunn (DE); Horstmeier, Jens, 86343 Königsbrunn (DE)
(74) Vertreter: Epping - Hermann - Fischer

(57) **Zusammenfassung**

Die Erfindung betrifft ein Verfahren zur Authentifizierung und Durchführung einer Wartungsfunktion einer Datenverarbeitungsvorrichtung mit einer Schnittstelle zum Bereitstellen von Dateien. In einem ersten Schritt wird erkannt, ob eine Datei über die Schnittstelle bereitgestellt wird. Die Datei wird dann über die Schnittstelle eingelesen, wobei überprüft wird, ob die Datei (11) von einer vorbestimmten Quelle erzeugt wurde. Wurde die Datei von der vorbestimmten Quelle erzeugt, wird im Folgenden Programmcode ausgeführt, der in der Datei enthalten ist, und der zum Aufrufen einer Wartungsfunktion dient.
Die erfindung betrifft außerdem eine Datenverarbeitungsvorrichtung und ein Computerprogrammprodukt, die zum Durchführen des Verfahrens eingerichtet sind.

## Beschreibung

Die Erfindung betrifft ein Verfahren zur Authentifizierung und Durchführung einer Wartungsfunktion einer Datenverarbeitungsvorrichtung mit einer Schnittstelle zum Bereitstellen von Dateien. Die Erfindung betrifft außerdem eine Datenverarbeitungsvorrichtung sowie ein Computerprogrammprodukt, die zur Durchführung des Verfahrens geeignet sind.

Viele Datenverarbeitungsvorrichtungen, insbesondere Computer, weisen besondere Betriebsarten zum Durchführen von Wartungsarbeiten auf. In solchen Betriebsarten können beispielsweise grundlegende Einstellungen für den Betrieb des Gerätes geändert werden oder neuer Programmcode zum Betrieb des Gerätes eingespielt werden.

Beispielsweise ist es von Unix-Betriebssystemen bekannt, zwischen normalen Benutzern (Usern) und Systemverwaltern (Superuser, Root oder Administrator) zu unterscheiden. Dabei sind Benutzer in der Regel nur dazu berechtigt, normale Anwendungen auszuführen, während Systemverwalter auch spezielle Systemprogramme, etwa zum Einrichten einer Festplatte, ausführen können oder neue Anwendungen auf dem System für alle Benutzer installieren können.

Um eine versehentliche Fehlbedienung oder mutwillige Manipulation der Datenverarbeitungsvorrichtung zu verhindern, ist der Zugriff zu solchen Wartungsfunktionen in der Regel durch ein Passwort geschützt. Dies ist für berechtigte Nutzer unkomfortabel, da das Passwort vor dem Aufruf der Wartungsfunktion eingegeben werden muss. In der Regel findet eine solche Passwortabfrage bereits beim Anmelden des Benutzers gegenüber der Datenverarbeitungsvorrichtung statt.

Bei Geräten der Unterhaltungselektronik, die in der Regel nicht über ein zentrales Datennetzwerk verwaltet werden und bei denen sich ein Benutzer nicht gegenüber dem Gerät anmelden muss, ergibt sich des Weiteren das Problem, wie ein Passwort zum Schutz der Wartungsfunktion festgelegt wird.

Zum Beispiel ist es möglich, ein einheitliches Passwort für alle Geräte einer Geräteserie zu verwenden. Dies hat den Nachteil, dass durch das Ausspähen dieses Passwortes der Zugang zu der Wartungsfunktion aller Geräte desselben Typs offen steht.

Alternativ kann schon beim Hersteller für jedes Gerät ein individuelles Passwort vergeben werden. Dies hat jedoch den Nachteil, dass beispielsweise ein vom Hersteller beauftragter Wartungstechniker Zugang zu einer umfangreichen Datenbank mit Passwörtern für jedes einzelne Gerät besitzen muss. Dies ist in der Praxis nur schwer durchzuführen.

Eine weitere Möglichkeit besteht darin, dass ein Gerät zunächst ungeschützt oder mit einem Standardpasswort geschützt ist und ein Benutzer bzw. Besitzer des Gerätes ein eigenes Passwort zu dessen Schutz vergeben kann. Dies weist den Nachteil auf, dass viele Benutzer dann gar kein Passwort vergeben und somit kein Schutz gegeben ist. Vergisst der Benutzer sein Passwort, kann ein Wartungstechniker möglicherweise die Wartungsfunktion überhaupt nicht mehr benutzen.

Aufgabe der Erfindung ist es daher, ein flexibel einsetzbares Verfahren zur Authentifizierung und Durchführung einer Wartungsfunktion von Datenverarbeitungsvorrichtungen zu beschreiben. Dabei soll das Verfahren insbesondere für Geräte der Unterhaltungselektronik einsetzbar sein und keine zusätzliche Hardware erfordern.

Erfindungsgemäß wird die Aufgabe durch ein Verfahren der eingangs genannten Art gelöst, das die folgenden Schritte aufweist:
- Erkennen, ob eine Datei über die Schnittstelle bereitgestellt wird,
- Einlesen der Datei über die Schnittstelle,
- Überprüfen, ob die Datei von einer vorbestimmten Quelle erzeugt wurde,
- Ausführen von Programmcode, der in der Datei enthalten ist, zum Aufrufen einer Wartungsfunktion, wenn erkannt wurde, dass die Datei von der vorbestimmten Quelle erzeugt wurde.

Erfindungsgemäß authentifiziert sich eine zur Wartung berechtigte Person durch zur Verfügung stellen einer besonderen Datei für die Datenverarbeitungsvorrichtung. Die Datenverarbeitungsvorrichtung überprüft Authentifizierungsdaten, die in der Datei enthalten sind, auf deren Herkunft. Wenn festgestellt wird, dass die Datei von einer vorbestimmten Quelle, beispielsweise dem Hersteller der Datenverarbeitungsvorrichtung, erzeugt wurde, wird ausführbarer Programmcode, der beispielsweise weitere Sicherheitsabfragen durchführen kann oder der direkt auszuführenden Programmcode einer Wartungsfunktion enthält, ausgeführt.

In einer vorteilhaften Ausgestaltung der Erfindung findet die Authentifizierung unter Verwendung eines Schlüsselpaares statt. Dabei besitzt die vorbestimmte Quelle einen geheimen Schlüssel, mit dem die bereitgestellte Datei signiert wird, und ein zweiter, öffentlicher Schlüssel ist in der Datenverarbeitungsvorrichtung hinterlegt. Mit dem zweiten, öffentlichen Schlüssel ist es möglich, die Authentizität der Datei zu überprüfen. Dabei kann der benötigte öffentliche Schlüssel entweder fest in der Datenverarbeitungsvorrichtung, beispielsweise in einem Festwertspeicher, gespeichert sein oder von einem vorbestimmten, zentralen Server herunter geladen werden.

Um die Sicherheit des Verfahrens zusätzlich zu erhöhen, können die Authentifizierungsdaten mit einem Ablaufdatum verknüpft werden. Beispielsweise kann ein Hersteller an seine Wartungstechniker eine Datei zum Aufrufen einer Servicefunktion bereitstellen, die jeweils nur für die aktuelle Woche Gültigkeit besitzt. Gelangt eine solche Datei in die Öffentlichkeit, kann sie nur für den Rest der Woche dafür verwendet werden, sich Zugang zu der Wartungsfunktion zu verschaffen. Somit bedeutet auch der Verlust einer bereits authentifizierten Datei nur ein geringes Sicherheitsrisiko.

Des Weiteren kann in der Datei eine Liste mit Gerätekennungen enthalten sein, die die Datei nur zum Zugang von Geräten mit einer entsprechenden Gerätekennung ausweist. Auch auf diese Weise kann der Zugang zu Geräten weiter beschränkt werden, sodass die Sicherheit des Verfahrens erhöht wird.

Die in der Datei zur Verfügung gestellten Daten können entweder komplett oder teilweise verschlüsselt werden. Dabei kann entweder dasselbe Schlüsselpaar zu deren Verschlüsselung verwendet werden, das bereits zur Authentifizierung eingesetzt wird, oder ein davon unabhängiges Verschlüsselungsverfahren eingesetzt werden.

Auf Seiten der Datenverarbeitungsvorrichtungen können unterschiedliche Schnittstellen zum Einlesen der Datei vorgesehen sein. Beispielsweise ist es möglich, eine solche Datei über ein bereits eingebautes Massenspeichermedium, beispielsweise eine CD oder DVD einzulesen. Dies bietet sich beispielsweise bei Multimediageräten mit eingebautem CD bzw. DVD-Laufwerk an. Alternativ kann eine solche Datei aber auch über eine elektrische Schnittstelle, wie beispielsweise einen USB- (Universal Serial Bus) oder Videoanschluss, dem Gerät bereitgestellt werden. Dies eignet sich beispielsweise für Settopboxen.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
Figur 1 eine Datenverarbeitungsvorrichtung, die zum Ausführen des Verfahrens eingerichtet ist,
Figur 2 ein Ablaufdiagramm des erfindungsgemäßen Verfahrens.

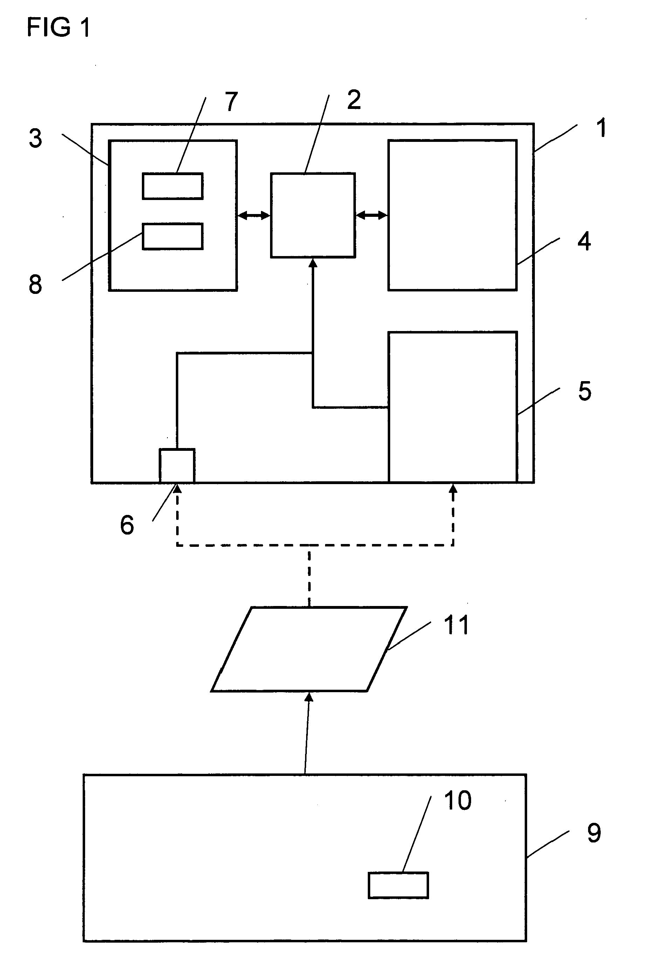

Figur 1 zeigt eine Datenverarbeitungsvorrichtung 1, die im Ausführungsbeispiel ein digitaler Videorekorder ist. Die Datenverarbeitungsvorrichtung 1 umfasst einen Prozessor 2, einen Festwertspeicher 3 und einen weiteren, veränderlichen Speicher 4. Beispielsweise kann es sich bei dem Festwertspeicher 3 um einen ROM- oder Flash-EEPROM-Speicher handeln. Der Speicher 4 kann beispielsweise ein flüchtiger Arbeitsspeicher (RAM) oder ein eingebautes Massenspeichergerät, wie beispielsweise eine Festplatte, sein. Des Weiteren weist die Datenverarbeitungsvorrichtung 1 ein Laufwerk 5 auf, beispielsweise ein CDROM- oder DVD-Laufwerk, das als wechselbarer Massenspeicher dient. Schließlich weist die Datenverarbeitungsvorrichtung 1 eine Schnittstelle 6 auf, beispielsweise eine USB-Schnittstelle zum Anschluss weiterer Geräte.

In dem Festwertspeicher 3 ist unter anderem eine Kennung 7 und ein Schlüssel 8 gespeichert. Bei der Kennung 7 kann es sich um eine eindeutige Gerätekennung oder eine Geräteklassenkennung handeln. Der Schlüssel 8 ist im Ausführungsbeispiel ein öffentlicher Schlüssel eines asymmetrischen Schlüsselpaars.

Eine Datenquelle 9 enthält einen weiteren Schlüssel 10, im Ausführungsbeispiel ein geheimer oder privater Schlüssel, der zum Signieren einer Datei 11 verwendet wird. Die Datei 11 kann danach der Datenverarbeitungsvorrichtung 1 entweder über das Laufwerk 5 oder die Schnittstelle 6 zur Verfügung gestellt werden.

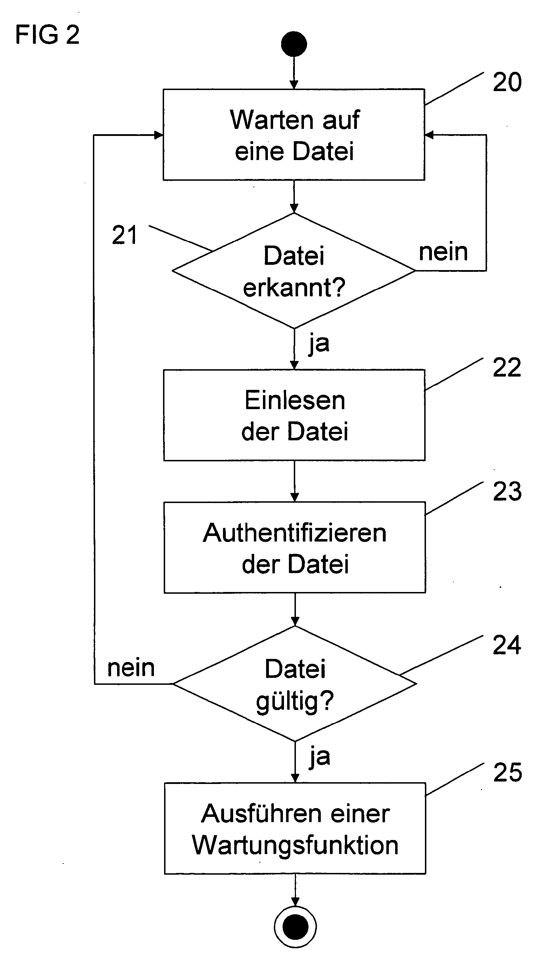

Das Verfahren wird im Folgenden unter Bezugnahme der in der Figur 1 dargestellten Datenverarbeitungsvorrichtung 1 und dem in Figur 2 dargestellten Ablaufdiagramm näher erläutert.

In einem Schritt 20 befindet sich die Datenverarbeitungsvorrichtung 1 zunächst in einer normalen Betriebsart. Dabei wartet die Datenverarbeitungsvorrichtung 1 ständig auf das zur Verfügung stellen einer Datei 11. Beispielsweise kann das Laufwerk 5 ständig auf das Einlegen eines neuen Speichermediums hin überwacht werden. Auch die Schnittstelle 6 kann auf den Anschluss eines neuen Gerätes hin überwacht werden, wie dies beispielsweise bei Schnittstellen nach dem USB-Standard üblich ist.

Wird in einem Schritt 21 das zur Verfügung stellen einer Datei 11 über das Laufwerk 5 oder die Schnittstelle 6 durch die Datenverarbeitungsvorrichtung 1 erkannt, wird die zur Verfügung gestellte Datei 11 in einem weiteren Schritt 22 eingelesen. Beispielsweise kann der Prozessor 2, die Datei 11 von dem Laufwerk 5 oder der Schnittstelle 6 in den Speicher 4 kopieren. Wird im Schritt 21 hingegen keine Datei 11 erkannt, beispielsweise weil an die Schnittstelle 6 ein Gerät angeschlossen wurde, das keine Dateien bereitstellt, wird zu dem Schritt 20 zurückgekehrt.

Eine eingelesene Datei wird nun in einem Schritt 13 authentifiziert. Die Authentifizierung kann beispielsweise nach einem Public-Key-Authentifizierungsverfahren vorgenommen werden. Ein solches Authentifizierungsverfahren sieht eine Erstellung von asymmetrischen Schlüsselpaaren vor, von denen ein geheimer Schlüssel 10 einer Datenquelle 9 zugeordnet wird und ein öffentlicher Schlüssel 8 einem Datenempfänger 1 zugeordnet wird.

Die Quelle 9, die im Besitz des geheimen Schlüssels 10 ist, signiert die zur Authentifizierung zu verwendende Datei 11 mit Hilfe des geheimen Schlüssels 10. Mit Hilfe des öffentlichen Schlüssels 8, der jedem zur Verfügung steht, insbesondere der Datenverarbeitungsvorrichtung 1, kann die Herkunft der Datei 11 überprüft werden. Da eine Verbreitung des öffentlichen Schlüssels 8 keine Gefährdung für den Schutz des erfindungsgemäßen Verfahrens darstellt, kann dieser in jeder Datenverarbeitungsvorrichtung 1, beispielsweise in deren Festwertspeicher 3, gespeichert sein.

Alternativ ist es auch möglich, den öffentlichen Schlüssel 8 von einem vorbestimmten Server, beispielsweise einem Webserver, herunter zu laden. Dazu muss die Datenverarbeitungsvorrichtung 1 an ein Datennetz angeschlossen sein. Dies ist insbesondere bei Multimediageräten üblich, die die Funktion eines digitalen Videorekorders mit Funktion eines Webbrowsers vereinen.

In einem Schritt 24 wird überprüft, ob die vorangegangene Authentifizierung erfolgreich war. Ist dies nicht der Fall, wird zum Schritt 20 zurückgekehrt und auf das zur Verfügung stellen einer weiteren Datei 11 gewartet. War die Authentifizierung hingegen gültig, wird in einem Schritt 25 ausführbarer Programmcode, der in der Datei 11 gespeichert ist, ausgeführt.

Der ausführbare Programmcode kann weitere Sicherheitsabfragen enthalten. Zum Beispiel kann in dem Programmcode eine weitere Passwortabfrage gespeichert sein, die vor der Benutzung der Wartungsfunktion aufgerufen wird. Im Unterschied zu einer Passwortabfrage, die in die Datenverarbeitungsvorrichtung 1 eingebaut ist, hat dies den Vorteil, dass das darin enthaltene Passwort nur in Verbindung mit der zugehörigen Datei 11 Gültigkeit besitzt. Des Weiteren ist eine solche Passwortabfrage auch von einem Gerät zu einem anderen Gerät übertragbar ist.

Der ausführbare Programmcode der Datei 11 kann dabei selbst Wartungsfunktionen, wie beispielsweise Installationsprogramme für zusätzliche Software, enthalten oder lediglich einen Verweis auf eine Wartungsfunktion, die in dem Festwertspeicher 3 oder dem Speicher 4 der Datenverarbeitungsvorrichtung 1 gespeichert ist, enthalten, die nach erfolgreicher Authentifizierung aufgerufen wird und in der normalen Betriebsart nicht zugänglich ist.

Durch die flexible Ausgestaltung der erfindungsgemäß verwendeten Datei ist es möglich, weitere Sicherungsmaßnahmen in das Verfahren zu integrieren. Beispielsweise ist es von Public-Key-Verfahren bekannt, Schlüsselpaare mit einem Ablaufdatum zu versehen. Erkennt die Datenverarbeitungsvorrichtung 1, dass eine erkannte Datei 11 zwar von einer vorbestimmten Quelle 9 stammt, das Schlüsselpaar, das zur Authentifizierung verwendet wurde, jedoch abgelaufen ist, kann die Datenverarbeitungsvorrichtung 1 den Zugang zu der Wartungsfunktion trotzdem sperren. Auf diese Weise ist sichergestellt, dass beim Verlust eines Datenträgers mit einer erfindungsgemäßen Datei 11 keine erheblichen Sicherheitslücken entstehen.

Um die Sicherheit des Verfahrens weiter zu erhöhen, kann die verwendete Datei 11 zusätzlich eine Liste mit Kennungen 7 enthalten. Dabei ist es möglich, entweder eine Liste von Typenkennungen oder individuellen Gerätekennungen in der Datei zu speichern. Damit kann der Zugang entweder zu einer bestimmten Serie von Geräten, beispielsweise einem genauen Typ eines Unterhaltungsgerätes, für das die Datei ein Software-Update zur Verfügung stellt, oder nur der individuelle Zugang zu einem oder wenigen Geräten gestattet werden.

Um das Ablaufdatum, den enthaltenen Programmcode, oder eine Liste mit Kennungen zusätzlich gegen Manipulation oder Ausspähen zu schützen, kann der Inhalt der Datei 11 ganz oder teilweise verschlüsselt werden. Dazu kann beispielsweise das zur Authentifizierung verwendete Schlüsselpaar 8 und 10 eingesetzt werden. Alternativ ist es auch möglich, eine konventionelle Verschlüsselung zu verwenden, bei dem ein Passwort zum Entschlüsseln des Dateiinhaltes über die Datenverarbeitungsvorrichtung 1 eingegeben werden muss. Beispielsweise kann ein Passwort einer in dem ausführbaren Code der Datei 11 enthaltene Passwortabfrage zugleich zur Entschlüsselung verwendet werden.

Nach Beenden der Wartungsarbeiten wird die Datenverarbeitungsvorrichtung 1 wieder in die normalen Betriebsart versetz. Dies kann beispielsweise automatisch am Ende der Ausführung des Programmcodes der Datei 11 erfolgen. Alternativ ist es auch möglich, das die Wartungsfunktion manuell, etwa durch Aufrufen einer speziellen Funktion durch den Wartungstechniker, verlassen wird. Des Weiteren kann auch vorgesehen sein, das eine Datenverarbeitungsvorrichtung nach einem Neustart, zum Beispiel nach einem Aus- und Einschalten, wieder in die normale Betriebsart wechselt.

### Bezugszeichenliste

- 1: Datenverarbeitungsvorrichtung
- 2: Prozessor
- 3: Festwertspeicher
- 4: Speicher
- 5: Laufwerk
- 6: Schnittstelle
- 7: Kennung
- 8: öffentlicher Schlüssel
- 9: Datenquelle
- 10: geheimer Schlüssel
- 11: Datei

- 20 - 25: Verfahrensschritte

## Patentansprüche

1. Verfahren zur Authentifizierung und Durchführung einer Wartungsfunktion einer Datenverarbeitungsvorrichtung (1) mit einer Schnittstelle (5, 6) zum Erkennen von Dateien, aufweisend die Schritte:
- Erkennen, ob eine Datei (11) über die Schnittstelle (5, 6) bereitgestellt wird,
- Einlesen der Datei (11) über die Schnittstelle (5, 6),
- Überprüfen, ob die Datei (11) von einer vorbestimmten Quelle (9) erzeugt wurde,
- Ausführen von Programmcode, der in der Datei (11) enthalten ist, zum Aufrufen einer Wartungsfunktion, wenn erkannt wurde, dass die Datei (11) von der vorbestimmten Quelle (9) erzeugt wurde.

2. Verfahren nach Anspruch 1,
**dadurch gekennzeichnet, dass**
im Schritt des Überprüfens Authentifizierungsdaten, die in der Datei (11) enthalten sind und die unter Verwendung eines geheimen Schlüssels (10) der vorbestimmten Quelle erzeugt wurden, unter Verwendung eines öffentlichen Schlüssels (8) überprüft werden.

3. Verfahren nach Anspruch 2,
**dadurch gekennzeichnet, dass**
der öffentliche Schlüssel (8) in der Datenverarbeitungsvorrichtung (1) gespeichert ist.

4. Verfahren nach Anspruch 2,
**dadurch gekennzeichnet, dass**
der öffentliche Schlüssel (8) auf einem zentralen Servercomputer gespeichert ist und die Datenverarbeitungsvorrichtung (1) zur Überprüfung der Authentifizierungsdaten über eine Datenverbindung zu dem Servercomputer verfügt.

5. Verfahren nach einem der Ansprüche 1 bis 4,
**dadurch gekennzeichnet, dass**
die Datei (11) zusätzlich ein Ablaufdatum aufweist und das Ausführen des Programmcodes nach dem Ablaufdatum durch die Datenverarbeitungsvorrichtung (1) verhindert wird.

6. Verfahren nach Anspruch 5,
**dadurch gekennzeichnet, dass**
die Datenverarbeitungsvorrichtung (1) über eine Datenverbindung zu einem Zeitserver verfügt und das in der Datei (11) enthaltene Ablaufdatum mit einer Zeitangabe des Zeitservers verglichen wird.

7. Verfahren nach einem der Ansprüche 1 bis 6,
**dadurch gekennzeichnet, dass**
die Datei (11) zusätzlich eine Liste mit Kennungen (7) aufweist und der Programmcode nur von solchen Datenverarbeitungsvorrichtungen (1) ausgeführt wird, die eine in der Liste enthaltene Kennung (7) aufweisen.

8. Verfahren nach Anspruch 7,
**dadurch gekennzeichnet, dass**
die Kennung (7) eine eindeutige Gerätekennung ist.

9. Verfahren nach Anspruch 7,
**dadurch gekennzeichnet, dass**
die Kennung (7) eine Geräteklassenkennung ist.

10. Verfahren nach einem der vorherigen Ansprüche,
**dadurch gekennzeichnet, dass**
das Verfahren zusätzlich den Schritt umfasst:
- Beenden der Wartungsfunktion, wenn das Ende der Wartungsarbeiten erkannt wurde.

11. Verfahren nach Anspruch 10,
**dadurch gekennzeichnet, dass**
das Ende der Wartungsarbeiten durch Abschalten der Datenverarbeitungsvorrichtung (1) erkannt wird.

12. Verfahren nach Anspruch 10,
**dadurch gekennzeichnet, dass**
das Ende der Wartungsarbeitung durch Aufrufe einer vorbestimmten Funktion der Datenverarbeitungsvorrichtung (1) erkannt wird.

13. Verfahren nach Anspruch 10,
**dadurch gekennzeichnet, dass**
das Ende der Wartungsarbeiten durch Beenden der Ausführung des in der Datei (11) enthaltenen Programmcodes erkannt wird.

14. Verfahren nach einem der vorherigen Ansprüche,
**dadurch gekennzeichnet, dass**
die Authentifizierungsdaten, der ausführbare Programmcode, das Ablaufdatum und/oder die Liste mit Kennungen (7) verschlüsselt in der Datei (11) gespeichert sind und durch die Datenverarbeitungsvorrichtung (1) entschlüsselt werden.

15. Datenverarbeitungsvorrichtung (1) mit einem Prozessor (2) zum Ausführen von Programmcode, einem Speicher (3, 4) zum Speichern von Programmcode und Daten, einer Schnittstelle (5, 6) zum Einlesen von Dateien, wobei die Datenverarbeitungsvorrichtung (1) in einer normalen Betriebsart und einer Wartungsbetriebsart betreibbar ist,
**dadurch gekennzeichnet, dass**
die Datenverarbeitungsvorrichtung (1) Programmcode zum Ausführen eines Verfahrens nach einem der Ansprüche 1 bis 14 enthält, durch die die Wartungsbetriebsart der Datenverarbeitungsvorrichtung (1) aktivierbar ist.

16. Datenverarbeitungsvorrichtung (1) nach Anspruch 15,
**dadurch gekennzeichnet, dass**
an die Schnittstelle (5) ein Massenspeichermedium, insbesondere ein Diskettenlaufwerk, ein CDROM-Laufwerk, ein DVD-Laufwerk, ein Chipkartenleser oder ein Festplattenlaufwerk, zum Einlesen von Daten angeschlossen ist.

17. Datenverarbeitungsvorrichtung (1) nach Anspruch 15,
**dadurch gekennzeichnet, dass**
die Schnittstelle (6) zum Empfangen von Daten einer externen Quelle eingerichtet ist.

18. Datenverarbeitungsvorrichtung (1) nach Anspruch 17,
**dadurch gekennzeichnet, dass**
die Schnittstelle (6) zum Anschluss an eine Videosignalquelle, ein Datennetzwerk oder ein USB-Gerät eingerichtet ist.

19. Computerprogrammprodukt mit Programmcode zum Durchführen eines Verfahren nach einem der Ansprüche 1 bis 14, wenn das Programm auf einer Datenverarbeitungsvorrichtung (1) abläuft.
